# EUROPEAN PATENT APPLICATION

(11) **EP 4 134 355 A1**
(43) Date of publication of application: **15.02.2023**
(21) Application number: 21191058.3
(22) Date of filing: 12.08.2021
(51) Int. Cl.: C04B 28/14, C04B 38/02

(54) **SELF-FOAMING GYPSUM COMPOSITIONS**

(71) Applicant: Sika Technology AG, 6340 Baar (CH)
(72) Inventor: Geraldo de Almeida, Valeria, 69008 Lyon (FR); Soudier, Jerome, 01150 Vaux en Bugey (FR); Prat, Evelyne, 93500 Pantin (FR); Granizo, Luz, 28043 Madrid (ES); Ackermann, Herbert, 8632 Tann (CH)
(74) Representative: Sika Patent Attorneys

(57) **Abstract**

A dry gypsum composition, in particular for preparing foamed gypsum compositions, comprises:
a) 10 - 50 wt.-% of a gypsum based binder;
b) 30 - 60 wt.% of aggregates, optionally comprising lightweight aggregates;
c) 1 - 15 wt.-%, especially 2 - 9 wt.%, of a foaming agent capable of producing carbon dioxide;
d) 0.5 - 10 wt.%, especially 1 - 6 wt.%, of an acidic agent, capable of reacting with the foaming agent under aqueous conditions for generation of carbon dioxide;
whereby the proportions are given with respect to the total weight of the dry gypsum composition.

## Description

### Technical field

The invention relates dry gypsum compositions, in particular for preparing foamed gypsum compositions. Additional aspects of the invention are related to a method for producing a foamed gypsum composition, a foamed gypsum composition obtainable with the method, and a foam body obtainable from the foamed gypsum composition. Furthermore, the invention is concerned with the use of a foamed gypsum composition or a foam body for thermal insulation, phonic insulation, fire protection, as a brick, as a panel, as cavity filling compound, as an injection grout, as insulation screed and/or as insulation facade render.

### Background art

In construction industry, mineral binder compositions are widely used, in particular in the form of mortar and concrete compositions based on cement and aggregates comprising sand and/or gravel. For more special purposes and applications, mineral binder compositions can be adapted to achieve certain desired properties or functionalities.

For example, there are mortars, e.g. based on lime, which are in particular adapted to fill cavities, e.g. in modular constructions. Such kind of mortars typically feature a high fluidity in order to facilitate the filling process.

Other examples are fire resistant mortars. A commercially available fire resistant mortar comprises for example cement as mineral binder in combination with fire retardant additives, e.g. alumina hydrates capable of releasing water and delaying fire propagation. Another mortar for fire protection comprises gypsum in combination with special lightweight aggregates, such as perlite, vermiculite, and expanded glass.

Of special interest are lightweight mineral binder compositions since they can be formulated to have several properties or functionalities combined, e.g. thermal insulation and fire protection.

In particular, lightweight mortars or concretes can be realized with lightweight aggregates, such as e.g. synthetic beads, cork, rubber and/or porous aggregates, or they can be produced by foaming the mortar composition.

The gas phase present in foamed mortars or concretes may be introduced by mechanical foaming in the presence of the respective gas, or it can be introduced by chemical foaming, whereby gas generating substances, e.g. aluminum powder, in the compositions liberate the gas upon contact with water.

US 2020/0207670 A1 (BASF SE) describes for example a hybrid foam, which is obtained by initially producing a mixture comprising at least one mineral binder, at least one polymer comprising monomer units derived from at least one ethylenically unsaturated monomer or from a combination of polyisocyanates and polyols and/or polyamines, and water. This mixture is subsequently mixed with an aqueous foam comprising water and a surface-active substance to obtain the hybrid foam.

However, there are certain drawbacks associated with known lightweight mineral binder compositions: Lightweight aggregates typically are expensive and difficult to handle in mortar compositions. Mechanical foaming of mortars or concretes requires additional equipment and skilled applicators. Gas generating substances used for chemical foaming typically are expensive and necessitate careful handling. For example, safe storage of aluminum powder requires special measures.

There is thus still a need to provide improved solutions, which overcome the above mentioned drawbacks of foamed mineral binder compositions or have them to a lesser extent.

### Disclosure of the invention

It is an object of the present invention to provide improved lightweight mineral binder compositions. Thereby, preferably, the lightweight mineral binder compositions should be as easy and safe to handle as possible. Especially, the lightweight mineral binder compositions should be suitable for different purposes and applications, in particular for thermal and phonic insulations as well as fire protection. Thereby, the improved lightweight mineral binder compositions should have beneficial chemical and mechanical properties, especially in terms of shrinkage, setting behavior and/or freeze thawing.

Surprisingly, it has been found that the features of claim 1 can achieve this object. Thus, the core of the present invention is related to a dry gypsum composition, in particular for preparing foamed gypsum compositions, comprising:
a) 10 ― 50 wt.-% of a gypsum based binder;
b) 30 - 60 wt.% of aggregates, optionally comprising lightweight aggregates;
c) 1 ― 15 wt.-%, especially 2 ― 9 wt.%, of a foaming agent capable of producing carbon dioxide;
d) 0.5 ― 10 wt.%, especially 1 ― 6 wt.%, of an acidic agent, capable of reacting with the foaming agent under aqueous conditions for generation of carbon dioxide;
whereby the proportions are given with respect to the total weight of the dry gypsum composition.

The inventive composition is a dry mix. This means that the dry gypsum composition is essentially free of water or an amount of water is below 1 wt.%, in particular below 0.5 wt.%, especially below 0.1 wt.% or below 0.01 wt.%, with respect to the total weight of the dry gypsum composition. Especially, the dry gypsum composition does not comprise any water.

Thus, as long as there is no contact with water, there is no risk of premature foaming. However, the foaming agent in combination with the acidic agent will generate non-hazardous CO₂ bubbles during and after the mixing of the dry gypsum composition with water. The bubble generation typically starts right after mixing with water.

Thereby, there is no need for special equipment, e.g. guns or foaming devices. The dry gypsum composition can be prepared, pumped, conveyed and applied with standard equipment.

Also, the composition is fully self-foaming and this even without the use of problematic foaming agents in the form of metals, such as e.g. aluminum. There is thus no need to separately prepare and mix in an additional foam component when preparing the dry gypsum composition with water for application.

Furthermore, with the dry gypsum composition, lightweight compositions and hardened bodies can be produced without need for lightweight aggregates.

The setting time can easily be adjusted, e.g. from 30 min to 1 hour, depending on the application. This allows to avoid the use of molds in case of filling cavities during casting.

Furthermore, compressive strengths after 2 days from 0.5 to 4 MPa, especially 2 to 3 MPa, can be achieved when densities of the foam bodies are in the range of 80 to 900 kg/m³, especially 400 to 700 kg/m³. After 28 days, the compressive strength can reach up to 4 MPa, especially up to 5 MPa, at densities as low as 500 kg/m³, especially as low as 200 kg/m³. Also, the inventive composition provides anti shrinkage benefits.

Another highly interesting advantage is the fact that the dry gypsum composition can be used as a multipurpose composition. For example, depending on the water content and the duration of mixing with water, the viscosity of the processable gypsum composition can be adapted easily, such that the processable composition is suitable for casting or for vertical applications. The inventive dry gypsum compositions can in particular be used for:
- Modular constructions
- Fire protection
- Phonic and thermal insulation
- Repair work
- Cavity filling
- Light insulation screeds
- Injection grouts
- Facade renders, e.g. for spray and manual application
- Precasting
- Panels
- Attic insulation foams
- Roofing insulation, and other applications.

Another interesting feature is that the gypsum composition of the invention in the hardened state can be easily removed by jet hydroblasting. For example, this is particularly interesting for modular construction, because it is possible to form the gypsum composition with specific cavities of mobile concrete columns and after being used, one can easily remove the residual gypsum composition by hydroblasting, making the concrete column again clean and ready to be used on another project. This means having a clean, recyclable and non-polluting building system.

Especially, the inventive dry gypsum compositions can be formulated to be user and environmentally friendly, non-hazardous, easy to produce with readily available raw materials, fast setting, very yielding and curable without special measures.

Additional aspects of the invention are subject of further independent claims. Particularly preferred embodiments are outlined throughout the description and the dependent claims.

### Ways of carrying out the invention

A first aspect of the present invention is directed to a dry gypsum composition, in particular for preparing foamed gypsum compositions, comprising:
a) 10 - 50 wt.-% of a gypsum based binder;
b) 30 ― 60 wt.% of aggregates, optionally comprising or consisting of lightweight aggregates;
c) 1 ― 15 wt.-%, especially 2 ― 9 wt.%, of a foaming agent capable of producing carbon dioxide;
d) 0.5 ― 10 wt.%, especially 1 ― 6 wt.%, of an acidic agent, capable of reacting with the foaming agent under aqueous conditions for generation of carbon dioxide;
whereby the proportions are given with respect to the total weight of the dry gypsum composition.

In the present context, the term "gypsum" refers to any known form of gypsum, in particular calcium sulfate dihydrate, calcium sulfate α-hemihydrate, calcium sulfate β-hemihydrate, a blend of calcium sulfate α-hemihydrate and calcium sulfate β-hemihydrate, calcium sulfate anhydrite or mixtures thereof.

A blend of calcium sulfate α-hemihydrate and calcium sulfate β-hemihydrate in particular is a blend of 50 - 90 wt.%, especially 60 - 80 wt.%, of calcium sulfate α-hemihydrate with 10 ― 50 wt.%, especially 20 ― 40 wt.%, of calcium sulfate β-hemihydrate. Preferably, the blend comprises 70 wt.% of calcium sulfate α-hemihydrate and 30 wt.% calcium sulfate β-hemihydrate.

Gypsum can be obtained from different sources, such as e.g. gypsum from natural sources, gypsum from flue gas desulphurization (FGD gypsum), phosphogypsum, pyro gypsum, and/or fluoro gypsum.

Preferably, all the components of the dry gypsum composition are solid, e.g. in the form of powders and/or particulates. Liquid substances, if present, preferably are provided as impregnation of solid particles. Especially, all of the components are intermixed.

The foaming agent preferably is a solid, especially in the form of a powder and/or particulates.

Especially, the foaming agent is a carbonate and/or bicarbonate salt, in particular CaCO₃, Na₂CO₃, and/or NaHCO₃, most preferably NaHCO₃. These are solid substances, which in dry state are chemically stable in the dry gypsum compositions. Nevertheless, they effectively produce carbon dioxide upon contact with an acidic agent and water. Thereby, the reaction products do not negatively affect the dry gypsum composition. However other substances can be used as well.

Preferably, the acidic agent has a pKₐ value in the range of 2 - 5, especially 3 ― 4. The "pKₐ" is meant to be the negative logarithm of the acid dissociation constant. Such acidic agents are able to react with the foaming agent in a gentle but nevertheless effective manner in order to produce suitable and evenly distributed bubbles of CO₂ in the gypsum composition after mixing with water. Nevertheless, for specific applications, acidic agents with pKₐ values outside this ranges might be suitable as well.

The acidic agent preferably is a solid, especially in the form of a powder and/or particulates.

In particular, the acidic agent is an aluminum salt, especially an aluminum sulfate, in particular Al₂(SO₄)₃, most preferably Al₂(SO₄)₃ · 18 H₂O. Al₂(SO₄)₃ turned out to be highly suitable in combination with a foaming agent in the present dry gypsum compositions. This is in particular true if the foaming agent is a carbonate and/or bicarbonate salt, in particular CaCO₃, Na₂CO₃, and/or NaHCO₃, most preferably NaHCO₃.

Typically, aluminum salts in dry state are chemically highly stable in the inventive dry gypsum compositions while being very suitable for activating carbon dioxide production upon contact with the foaming agent in aqueous media. Furthermore, reaction products do not negatively affect the dry gypsum composition. However other substances can be used as well.

Thus, most preferably, the foaming agent is a carbonate and/or bicarbonate salt, in particular CaCO₃, Na₂CO₃, and/or NaHCO₃, most preferably NaHCO₃, and at the same time the acidic agent is an aluminum salt, especially an aluminum sulfate, in particular Al₂(SO₄)₃, most preferably Al₂(SO₄)₃ · 18 H₂O.

Especially, the gypsum based binder comprises or consists of calcium sulfate hemihydrate, in particular calcium sulfate α-hemihydrate and/or calcium sulfate β-hemihydrate. The gypsum based binder, with respect to the total amount of gypsum based binder, preferably includes at least 70 wt.% calcium sulfate hemihydrate, even more preferably at least 90 wt.% calcium sulfate hemihydrate.

In a special embodiment the gypsum based binder comprises or consists of a blend of calcium sulfate α-hemihydrate and calcium sulfate β-hemihydrate. In particular, with respect to the total weight of the gypsum based binder, the blend comprises 50 - 90 wt.%, especially 60 - 80 wt.%, of calcium sulfate α-hemihydrate and 10 ― 50 wt.%, especially 20 - 40 wt.%, of calcium sulfate β-hemihydrate. Most preferably, with respect to the total weight of the gypsum based binder, the blend comprises 70 wt.% of calcium sulfate α-hemihydrate and 30 wt.% calcium sulfate β-hemihydrate. Such kind of gypsum based binders turned out to be beneficial for obtaining a high water resistance.

The gypsum based binder may comprise or consist of gypsum from different sources, e.g. gypsum from natural sources, flue gas desulphurization (FGD) gypsum, phosphogypsum, pyro gypsum, and/or fluoro gypsum.

According to a further preferred embodiment, the composition further comprises 0.1 - 10 wt.%, in particular 1 ― 8 wt.% or 3 ― 7 wt.%, of a further mineral binder, especially selected from Portland cement, aluminate cement, sulphoaluminate cement, latent hydraulic and/or pozzolanic binder materials, and/or hydrated lime.

Preferred Portland cement is according to standard EN 197, in particular of type CEM I. The term "alumina cement" stands in particular for a cement with an aluminum content, measured as Al₂O₃, of at least 30 wt.%, especially at least 35 wt.%, in particular 35 - 58 wt.%. Preferably, the alumina cement is alumina cement according to standard EN 14647. Preferably, the sulphoaluminate cement is calcium sulphoaluminate cement.

Further mineral binders help to increase the mechanical resistance of foam bodies prepared from the inventive dry gypsum compositions.

Especially preferred, the further mineral binder comprises aluminate cement, sulphoaluminate cement and/or Portland cement. Portland cements in particular improve the surface resistance of foam bodies prepared from the inventive dry gypsum compositions. Aluminate cement and sulphoaluminate cement especially accelerate the hardening process.

Aggregates preferably comprise sand, quartz, gravel, and/or lightweight aggregates. Especially the aggregates comprise sand. A particle size of the aggregates in particular is from 0.01 ― 10 mm, especially 0.05 ― 5 mm, preferably 0.1 ― 4 mm, in particular 0.15 ― 2 mm. In a special embodiment, the proportion of the aggregates is from 40 ― 55 wt.%.

The term "lightweight aggregates" stands in particular for aggregates with a particle density ≤ 2'000 kg/m³, preferably ≤ 1'500 kg/m³, especially ≤ 1'250 kg/m³. The particle density of an aggregate is the ratio between the mass of the particle material and the volume occupied by the individual particles. This volume includes the pores within the particle but does not include voids between the particles.

Lightweight aggregates in particular are selected from wood particles, plastic particles, rubber particles, cork particles, inorganic particles, layered particles, hollow particles and/or porous particles. In a special embodiment, the lightweight particles are present as a powder.

Especially, the lightweight aggregates are selected from vermiculite, perlite and/or expanded glass, e.g. expanded glass available under the tradename Poraver^{®}. Most preferred lightweight aggregates are vermiculite and/or expanded glass, especially expanded glass available under the tradename Poraver^{®}.

Furthermore, the composition preferably comprises 1 - 30 wt.%, especially 10-25 wt.% of a filler, preferably calcium carbonate filler. Thereby, a particle size of the filler in particular is < 150 µm, especially < 100 µm. Fillers can be used to improve thixotropic properties. However, fillers are optional.

The dry gypsum composition may further comprise 0.001 - 1 wt.%, especially 0.01 ― 0.1 wt.-% of a gypsum accelerator, especially calcium sulfate dihydrate. This allows for reducing the setting and/or hardening times, which is especially beneficial in casting applications since de-molding is possible at earlier times.

In a further preferred embodiment, the dry composition comprises 0.1 ― 10 wt.%, especially 0.5 ― 5 wt.% of a water redispersible polymer. Preferably, the water redispersible polymer is present in the form of a powder. Without being bound by theory, it is believed that the polymer helps to stabilize the bubbles in the foamed gypsum composition. Furthermore, the polymer improves the brittleness and smoothness of the surface of foam bodies produced from foamed gypsum composition.

Especially, the water redispersible polymer is a homopolymer or copolymer based on one or more monomers selected from vinyl ester, vinyl acetate, vinyl alcohol, vinyl chloride, vinyl laureate, acrylic acid, acrylate, methacrylic acid, methacrylate, methylmethacrylate, acrylonitrile, styrene, butadiene, ethylene or mixtures thereof. Highly preferred are copolymers based on styrene and butadien.

Preferably, the polymer is selected from poly(vinyl acetate-ethylene), poly(vinyl acetate-ethylene-methylmethacrylate), poly(vinyl acetate-ethylene-vinylester), poly(vinyl acetate-ethylene-acrylic acid ester), poyl(vinyl acetate-ethylene-vinyl laureate), poly(vinyl acetate-vinyl versate), poly(acrylic ester-acrylonitrile), poly(acrylic ester-styrene butadiene), poly(styrene-butadiene) or mixtures thereof. Highly preferred as the water redispersible polymer is poly(styrene-butadiene).

However, other polymers might be suitable as well.

Furthermore, the composition preferably comprises 0.001 - 5 wt.%, especially 0.1 ― 2 wt.%, of at least one additive selected from the group of polysaccharide-based viscosity modifiers and precipitated amorphous silica. Polysaccharide-based viscosity modifiers are in particular selected from starch ethers and/or diutan gum. These substances, in particular in combination, help to prevent coalescence of the gas bubbles in the foamed composition. Starch ethers are further beneficial for equilibrating the speed of expansion during foaming.

The composition may additionally comprises 0.001 ― 1 wt.% of a plasticizer, especially selected from the group of lignosulfonates, gluconates, naphthalenesulfonates, melamine sulfonates, vinyl copolymers and/or polycarboxylates. A plasticizer is beneficial for obtaining a desired flowability of the foamed gypsum composition. In particular, the plasticizer is different from the above described water redispersible polymer.

Furthermore, the composition preferably comprises 0.001 - 5 wt.%, especially 0.1 - 2 wt.%, of at least one hydrophobizing agent. Preferably, the hydrophobizing agent is selected from silanes, siloxanes, siliconates, silicones, and/or fatty acids. Suitable silanes, siloxanes, siliconates, and silicones are commercially available from various suppliers, e.g. from Sika (Switzerland) under the tradename Sikagard^{®}. Examples of fatty acids are stearic acid, oleic acid, caprylic acid, capric acids and mixtures thereof. However, other hydrophobizing agents can be used as well.

Preferably, the dry gypsum composition comprises fibers, in particular mineral, plastic and/or cellulose fibers. Mineral fibers are highly preferred. A proportion of the fibers is preferably from 0.001 ― 3 wt.%, in particular 0.01 ― 2.5 wt.%, especially 1 - 2 wt.%, with respect to the weight of the dry gypsum composition. In a preferred embodiment, a length of the fibers is for example 0.5 ― 1'000 µm.

Although the inventive dry gypsum compositions do not require other foaming agents than claimed, different types of foaming agents, e.g. aluminum powder, can be used in addition for special applications.

In a highly preferred embodiment, the dry gypsum composition comprises:
a) 10 ― 50 wt.-% of a gypsum based binder, especially comprising calcium sulfate α-hemihydrate and/or calcium sulfate β-hemihydrate;
b) 30 - 60 wt.% of aggregates comprising sand, quartz, gravel and/or lightweight aggregates, whereby the lightweight aggregates, if present, in particular are selected from vermiculite and/or expanded glass, e.g. expanded glass available under the tradename Poraver^{®};
c) 1 ― 15 wt.-%, especially 2 ― 9 wt.%, of a foaming agent capable of producing carbon dioxide, whereby the foaming agent is a carbonate and/or bicarbonate salt, especially sodium bicarbonate (NaHCO₃);
d) 0.5 ― 10 wt.%, especially 1 ― 6 wt.%, of an acidic agent, capable of reacting with the foaming agent under aqueous conditions for generation of carbon dioxide, whereby the acidic agent is an aluminum salt, especially aluminum sulfate;
e) 0.1 ― 10 wt.% of a further mineral binder selected from aluminate cement, sulphoaluminate cement and/or Portland cement;
f) 1 ― 30 wt.%, especially 10 ― 25 wt.% of a filler, preferably calcium carbonate filler;
g) Optionally 0.001 - 0.05, especially 0.01 - 0.9 wt.-% of a gypsum accelerator, especially calcium sulfate dihydrate;
h) Optionally 0.5 ― 7 wt.% of a redispersible polymer, especially a styrene butadiene copolymer
i) 0.001 - 5 wt.%, especially 0.1 - 2 wt.%, of at least one additive selected from the group of polysaccharide-based viscosity modifiers, in particular selected from starch ethers and/or diutan gum, and precipitated amorphous silica;
j) Optionally 0.001 - 1 wt.% of a plasticizer, especially selected from the group of lignosulfonates, gluconates, naphthalenesulfonates, melamine sulfonates, vinyl copolymers and/or polycarboxylates;
k) Optionally from 0.001 ― 3 wt.% fibers, preferably mineral fibers;
l) Optionally 0.001 ― 5 wt.%, of at least one hydrophobizing agent.

Thereby, at least one, two or all of the optional features are realized.

A further aspect of the present invention is directed to a method for producing a foamed gypsum composition comprising the steps of (i) providing a dry gypsum composition as described above and (ii) mixing the dry gypsum composition with water. This results in a processable foamed gypsum composition.

Thereby, preferably, water is used with a proportion of 20 - 40 parts by weight per 100 parts by weight of the dry gypsum composition.

In a first preferred implementation, water is added in a proportion of 22 ― 27 parts by weight.

A second preferred embodiment, water is added in a proportion of 30 - 37 parts by weight.

The method preferably does not comprise any mechanical and/or physical foaming. However, if desired, such methods can be applied in addition.

Especially, the method further comprises a step of hardening the dry gypsum composition mixed with water or the foamed gypsum composition, respectively. Thereby, a foam body is obtained. Such foam bodies can e.g. be in the form of a casted body, a brick, a panel, a coating on a substrate, a screed, a wall, a floor, a wall barrier, a floor barrier and/or a ceiling.

Another aspect of the present invention is directed to a foamed gypsum composition obtainable by the method as described above. In particular the foamed gypsum composition is a processable foamed gypsum composition. Such compositions can be casted and/or applied on substrates.

Another aspect of the present invention is directed to a foam body obtainable by hardening the foamed gypsum composition described above. Such foam bodies can e.g. be in the form of a casted body, a brick, a panel, a coating on a substrate, a screed, a wall, a floor, a wall barrier, a floor barrier and/or a ceiling.

Especially, the foam body has a density of 20 - 900 kg/m³, in particular 30 - 800 kg/m³, especially 40 - 600 kg/m³, preferably 50 - 500 kg/m³.

Additionally, the invention is concerned with the following uses:
A first inventive use is directed to the use of a foaming agent capable of producing carbon dioxide in combination with an acidic agent, capable of reacting with the foaming agent under aqueous conditions for generation of the carbon dioxide, for producing a foamed gypsum composition. Thereby, preferably, a foaming agent and an acidic agent as described above are used.

A second inventive use is directed to the use of a foamed gypsum composition or of a foam body as described above for modular construction, repair work, precasting, thermal insulation, phonic insulation, as attic insulation foams, for roofing insulation, fire protection, as a brick, as a panel, as cavity filling compound, as an injection grout, as an insulation screed, as light insulation screed and/or as insulation facade render.

When used for modular construction, the foamed gypsum composition or the foam body as described above can specifically be used to:
- protect steel parts against fire, especially at high temperatures up to 500°C during 1 hour;
- increase protection against corrosion, especially in combination with protective corrosion inhibitors, such as e.g. sodium benzoate and/or potassium nitrite.
- Provide phonic and thermal insulation, especially to structures between floors.

Thanks to the inventive composition, the foamed gypsum composition or the foam body can easily be removed by hydroblasting during the deconstruction phase.

In fire protection, the foamed gypsum composition or the foam body as described above can be used as fire protection of walls, ceilings and facades of buildings or tunnels, especially in the form of floor barriers and/or wall barriers to retard fire propagation in buildings or tunnels.

Bricks or panels can be aesthetic bricks or panels, optionally colored, for interior use.

Phonic insulation and/or thermal insulation can be realized by bricks made of the foamed gypsum composition or by applying the foamed gypsum composition by in situ placing on job sites, especially by vertical and/or horizontal application. Thereby, the inventive foamed gypsum compositions can be used as replacement of known systems, such as e.g. systems based on YTONG or Xella technology. When used as repair mortar, the foamed gypsum composition can in particular be used for filling small volumes such as cracks.

If used as insulating screed, the foamed gypsum compositions can easily achieve densities below 800 kg/m³ with compressive strength of 2 to 4 MPa. Thereby, the addition of aluminate cement allows to produce screeds, which are walkable already after 24 hours.

Further advantageous configurations of the invention are evident from the exemplary embodiments.

### Exemplary embodiments

In the following table 1, six different inventive dry gypsum compositions C1 ― C6 are described. The compositions were prepared by intermixing the solid components in a standard mixer.

**Table 1: Dry gypsum compositions (proportions given in wt.%)**

| **Component** | **C1** | **C2** | **C3** | **C4** | **C5** | **C6** |
|---|---|---|---|---|---|---|
| Hemihydrate CaSO4 · ½ H₂O (β) | 20 | - | - | - | - | - |
| Hemihydrate CaSO₄ · ½ H₂O (α and β)^{#} | - | 30 | 40 | 40 | 40 | 40 |
| Portland cement CEM I 52,5 N | 0.4 | 6 | 2 | - | - | - |
| Calcium aluminate cement (CAC)¹⁾ | - | - | - | 5 | 5 | 5 |
| Hydrated lime Ca(OH)₂ ²⁾ | - | - | - | - | 1 | 1,6 |
| Silica sand_SiO2 (0 ― 0.315 mm) | 52 | 40 | 9.3 | 13 | 10 | 10 |
| Silica sand_SiO2 (0.2 ― 2 mm) | - | - | 37 | 30 | 24 | 8 |
| Limestone Filler CaCO₃ (< 0,15mm) | 22.23 | 13.92 | - | - | - | - |
| Expanded Glass Fine (0.1 - 0.3 mm) | - | - | - | - | - | 5 |
| Expanded Glass Coarse (0 ― 0.5 mm) | - | - | - | - | - | 13 |
| Diutan gum blend³⁾ | 0.1 | 0.2 | 0.2 | 0.2 | 0.29 | 0.2 |
| Pregelatinized potato starch ether ⁴⁾ | 0.05 | 0.1 | 0.1 | 0.1 | 0.2 | 0.1 |
| Precipitated amorphous silica⁵⁾ | - | 1 | 1 | 1 | 1.5 | 1.25 |
| Aluminum Sulfate Al₂(SO₄)₃ · 18 H₂O | 2 | 3 | 3 | 3 | 5 | 3 |
| Sodium Bicarbonate NaHCO₃ | 3 | 5 | 5 | 5 | 8 | 5 |
| Polycarboxylate | 0.2 | 0.2 | 0.2 | 0.3 | 0.4 | 0.35 |
| Calcium sulfate dihydrate | 0.02 | 0.03 | 0.05 | 0.05 | 0.06 | 0.06 |
| Styrene-butadiene copolymer⁶⁾ | - | 0.8 | 2 | 2 | 3 | 5.5 |
| Mineral fibers⁷⁾ | - | - | - | - | 1.5 | 2.0 |
| Calcium Magnesium phosphate | - | - | 0.125 | 0.125 | - | - |
| Sodium Benzoate | - | - | 0.125 | 0.125 | - | - |

| | | | | | | |
|---|---|---|---|---|---|---|
| ^{#)} 70 wt.% α-hemihydrate and 30 wt.% β-hemihydrate ¹⁾ E.g. Ternal White, available from Kerneos/Imerys, France ²⁾ Tradical^{®} H90, Lhoist Group,Belgium ³⁾ Kelkocrete DG-S, CP Kelco, USA, manufactured by CP Kelco (Shandong) Biological Co. Ltd. ⁴⁾ Opagel CMT, Cooperatie Avebe U.A, Veendam, The Netherlands ⁵⁾ Tixosil 38 AB, Solvay, Switzerland ⁶⁾ Axilat PSB 150, Synthomer, France ⁷⁾ Lapinus CF10, ROCKWOOL B.V., The Netherlands | | | | | | |

The dry gypsum compositions **C1 ― C6** were mixed with water (proportions given in table 2) to produce foamed gypsum compositions that were allowed to harden into foam bodies **HC1** ― **HC6.**

For measuring the expansion of the foamed gypsum compositions, the following procedure was followed: 200 g of the dry gypsum composition was filled in a first cylindrical beaker B1 (height = 6 cm; radius = 4.25 cm). The amount of water with the proportions given in table 2 was poured into a second beaker B2 (height = 16 cm; diameter = 11 cm). Subsequently, the dry gypsum composition from beaker B1 was sprinkled into the water comprised in beaker B2 and mixed for 60 seconds with a paddle mixer at 1'200 rpm. Then the mixing paddle was removed from beaker B2, residual material was scraped down from the paddle and the mixture was poured into beaker B1. Thereby, beaker B1 was completely filled to the top and leveled with a spatula.

During the hardening process of the mixture in beaker B1, the volume increased whereby the height of the mixture increased. The expansion was calculated from the difference in height (finale height minus initial height).

Properties of the foam bodies **HC1** - **HC6** produced are given in table 2.

**Table 2: Foamed compositions and foam bodies produced with inventive dry gypsum compositions.**

| | **HC1** | **HC2** | **HC3** | **HC4** | **HC5** | **HC6** |
|---|---|---|---|---|---|---|
| Dry gypsum composition | **C1** | **C2** | **C3** | **C4** | **C5** | **C6** |
| Amount of water; parts by weight with respect to 100 parts dry gypsum composition | 26 | 35 | 25 | 27 | 37 | 40 |
| Expansion¹⁾ [mm] | 6 | 6 | 6 | 6 | 6 | 6 |
| Expansion¹⁾ [%] | 20 | 20 | 20 | 20 | 25 | 25 |
| Fresh Density [kg/m³] | 450 | 400 | 800 | 800 | 840 | 700 |
| Density after hardening [kg/m³] | 560 | 500 | 600 | 600 | 650 | 380 |
| Compressive strength, 28 d²⁾ [MPa] | 0.5-0.8 | 1 | 3.5 | 1.5 | 1.5 | n.a. |

| | | | | | | |
|---|---|---|---|---|---|---|
| ¹⁾ Measured as described above ²⁾ Compressive strength, after 28 day, determined similar to standards EN 12390-1 to 12390-4. | | | | | | |

After mixing with water, the pot life was about 30 min for all compositions. After 30 min the compositions started thickening and could for example be applied as repair mortars on vertical surfaces. The time of workability, where the applied composition can be corrected or adjusted, is about 60 min.

It will be appreciated by those skilled in the art that the present invention can be embodied in other specific forms without departing from the spirit or essential characteristics thereof. The presently disclosed implementations and embodiments are therefore considered in all respects to be illustrative and not restricted.

## Claims

1. Dry gypsum composition, in particular for preparing foamed gypsum compositions, comprising:
a) 10 ― 50 wt.-% of a gypsum based binder;
b) 30 - 60 wt.% of aggregates, optionally comprising light weight aggregates;
c) 1 ― 15 wt.-%, especially 2 ― 9 wt.%, of a foaming agent capable of producing carbon dioxide;
d) 0.5 ― 10 wt.%, especially 1 - 6 wt.%, of an acidic agent, capable of reacting with the foaming agent under aqueous conditions for generation of carbon dioxide;
whereby the proportions are given with respect to the total weight of the dry gypsum composition.

2. Dry gypsum composition according to claim 1, whereby the foaming agent is a carbonate and/or bicarbonate salt, especially CaCO₃, Na₂CO₃, and NaHCO₃, most preferably NaHCO₃.

3. Dry gypsum composition according to any of preceding claims, whereby the acidic agent has a pKₐ value in the range of 2 - 5, especially 3 ― 4.

4. Dry gypsum composition according to any of claims 1 ― 2, whereby the acidic agent is an aluminum salt, especially aluminum sulfate, in particular Al₂(SO₄)₃ · 18 H₂O.

5. Dry gypsum composition according to any of preceding claims, whereby the composition further comprises 0.1 ― 10 wt.% of a further mineral binder, whereby the further mineral binder comprises aluminate cement, sulphoaluminate cement and/or Portland cement.

6. Dry gypsum composition according to any of preceding claims, whereby the aggregates comprise sand, quartz and/or gravel, especially sand.

7. Dry gypsum composition according to any of preceding claims, whereby the composition comprises 1 ― 30 wt.%, especially 10 ― 25 wt.% of a filler, preferably calcium carbonate filler.

8. Dry gypsum composition according to any of preceding claims, whereby the composition comprises 0.1 ― 10 wt.%, especially 0.5 ― 5 wt.% of a water redispersible polymer, especially a styrene butadiene copolymer.

9. Dry gypsum composition according to any of preceding claims, whereby the composition comprises 0.001 - 5 wt.%, especially 0.1 - 2 wt.%, of at least one additive selected from the group of polysaccharide-based viscosity modifiers, in particular selected from starch ethers and/or diutan gum, and precipitated amorphous silica.

10. Dry gypsum composition according to any of preceding claims, whereby the composition comprises:
a) 10 ― 50 wt.-% of a gypsum based binder, especially comprising calcium sulfate α-hemihydrate and/or calcium sulfate β-hemihydrate;
b) 30 ― 60 wt.% of aggregates comprising sand, quartz gravel, and/or lightweight aggregates, whereby the lightweight aggregates, if present, in particular are selected from vermiculite and/or expanded glass;
c) 1 ― 15 wt.-%, especially 2 ― 9 wt.%, of a foaming agent capable of producing carbon dioxide, whereby the foaming agent is a carbonate and/or bicarbonate salt, especially sodium bicarbonate (NaHCO₃);
d) 0.5 ― 10 wt.%, especially 1 - 6 wt.%, of an acidic agent, capable of reacting with the foaming agent under aqueous conditions for generation of carbon dioxide, whereby the acidic agent is an aluminum salt, especially aluminum sulfate;
e) 0.1 - 10 wt.% of a further mineral binder selected from aluminate cement, sulphoaluminate cement and/or Portland cement cement;
f) 1 ― 30 wt.%, especially 10-25 wt.% of a filler, preferably calcium carbonate filler;
g) 0.001 ― 0.05, especially 0.01 ― 0.9 wt.-% of a gypsum accelerator, especially calcium sulfate dihydrate;
h) 0.5 ― 5 wt.% of a redispersible polymer, especially a styrene butadiene copolymer
i) 0.001 ― 5 wt.%, especially 0.1 ― 2 wt.%, of at least one additive selected from the group of polysaccharide-based viscosity modifiers, in particular selected from starch ethers and/or diutan gum, and precipitated amorphous silica;
j) 0.001 ― 1 wt.% of a plasticizer, especially selected from the group of lignosulfonates, gluconates, naphthalenesulfonates, melamine sulfonates, vinyl copolymers and/or polycarboxylates;
k) Optionally from 0.001 - 3 wt.% fibers, preferably mineral fibers;
l) Optionally from 0.001 - 5 wt.% of at least one hydrophobizing agent.

11. Method for producing a foamed gypsum composition comprising the steps of (i) providing a dry gypsum composition as defined in any of preceding claims and (ii) mixing the dry gypsum composition with water.

12. Method according to claim 11, whereby water is used with a proportion of 20 - 40 parts by weight per 100 parts by weight of the dry gypsum composition.

13. Foamed gypsum composition obtainable by a method according to any of claims 11 - 12.

14. Foam body obtainable by hardening the foamed gypsum composition according to claim 13.

15. Use of a foamed gypsum composition according to claim 13 or of a foam body according to claim 14 for modular construction, repair work, precasting, thermal insulation, phonic insulation, as attic insulation foams, for roofing insulation, fire protection, as a brick, as a panel, as cavity filling compound, as an injection grout, as an insulation screed, as light insulation screed and/or as insulation facade render.
